# EUROPÄISCHE PATENTSCHRIFT

(11) **EP 0 574 649 B1**
(45) Veröffentlichungstag und Bekanntmachung des Hinweises auf die Patenterteilung: **04.09.1996**
(21) Anmeldenummer: 92890148.7
(22) Anmeldetag: 17.06.1992
(51) Int. Cl.: G07G 1/00, G07F 7/00

(54) **Aufschnittschneidemaschine**
Slicing machine
Machine à découper en tranches

(43) Veröffentlichungstag der Anmeldung: 22.12.1993
(73) Patentinhaber: Kuchler, Fritz, A-9010 Klagenfurt (AT)
(72) Erfinder: Kuchler, Fritz, A-9010 Klagenfurt (AT)
(74) Vertreter: Müllner, Erwin, Dr.

(56) Entgegenhaltungen:
- EP-A- 0 458 284
- EP-A- 0 470 673
- FR-A- 2 566 148
- US-A- 4 186 439
- US-A- 4 603 232
- US-A- 4 649 481
- US-A- 4 813 316
- US-A- 4 867 257

## Beschreibung

Die Erfindung betrifft eine Aufschnittschneidemaschine mit Ablegeeinrichtung und mit einer Steuerung für die Ablegeeinrichtung und für den Antrieb eines Schnittgutwagens sowie mit einem der Steuerung zugeordneten Speicher und einem Anschluß zur Dateneingabe für die Anzahl der aufzuschneidenden Scheiben und mit einer Anzeigevorrichtung.

Aus der US-PS 4 813 316 ist eine automatische Schneidemaschine für Lebensmittel mit einem Schnittgutwagen bekannt, bei der gewisse Parameter wie Scheibenzahl, Hublänge der Schnittbewegung und Schnittgeschwindigkeit einstellbar sind. Aus einem programmierbaren Speicher können diese Parameter abgerufen werden. Ein Display zeigt dann die Anzahl der vorprogrammierten Hübe, die nach dem Einschalten der Maschine ausgeführt werden. Auf diese Weise kann die Maschine genau die gewünschte Schnittgutmenge aufschneiden, die dann im Stapel vorliegt.

Die US-PS 4 428 263 betrifft eine Einrichtung zum Aufschneiden von Schnittgut, die über eine Waage verfügt. Die Daten werden in einem Rechner zur Steuerung der Einrichtung ausgewertet, sodaß ein genaues Portionieren möglich ist.

Die US-PS 4 186 439 offenbart eine Registrierkasse, die zur Aufstellung einer tages- oder kalenderzeitbezogenen Umsatzstatistik eingerichtet ist.

In Delikatessenabteilungen wie auch in Supermärkten ist man bestrebt, aufzuschneidende Lebensmittel, wie etwa Wurst oder Käse, mögllichst frisch anzubieten. Ein unmittelbares Aufschneiden im Augenblick der Bestellung durch den Kunden kann oft nicht realisiert werden. Daher werden Aufschnitte vorbereitet und in die Kühlvitrine gelegt. Dabei ist es anzustreben, gerade so viel aufgeschnittene Ware vorrätig zu haben, wie kurzfristig verlangt wird. Dieses vom Standort zu Standort eines Geschäftes unterschiedliche Verkaufsprofil an tageszeitabhängigem warenspezifischem Umsatz ist ein Kriterium für den Bedarf. Die Erfindung zielt darauf ab, eine Aufschnittschneidemaschine so auszubilden, daß ein bedarfsgerechtes Schneiden selbsttätig erfolgen kann. Dies wird bei einer Aufschnittschneidemaschine der eingangs beschriebenen Art dadurch erreicht, daß Schnittgutsorte, Schnittgutstärke, Ablegebild und Startzeit des Schneidevorganges zur bedarfskonformen Aufschnittvorbereitung zusätzlich einspeicherbar und dem Speicher insbesondere von einem Rechner zuführbar sind, der die Verkaufsdaten wie Schnittgutsorte, Menge und Uhrzeit des Warenumsatzes von der oder den Rechenwaagen oder Kassen zur Ermittlung des uhrzeitabhängigen durchschnittlichen Bedarfs je Schnittgutsorte erfaßt und daß die eingespeicherten zeitbezogenen Daten zeitabhängig auf die Anzeigevorrichtung selbsttätig aufschaltbar und beim Starten der Maschine aus dem Speicher zur Steuerung der Maschine abrufbar sind. Über den Speicher wird somit zu einer ermittelten Uhrzeit auf dem Bildschirm der Anzeigevorrichtung eine Wurstsorte optisch und gegebenenfalls akustisch aufgerufen. Der Verkäufer, der den Hinweis auf dem Bildschirm feststellt, legt eine Stange der aufgerufenen Wurstsorte auf und startet die Maschine, deren Speicher über die Maschinensteuerung die Schnittdaten einstellt, beispielsweise die Scheibenanzahl, die Schnittstärke, den Vorschub, das Ablegebild (z.B. Stapeln oder Ablegen von Zeilen und Spalten) die Verpackungsart und die Portionsmenge. Entweder wird das auf Vorrat gezielt aufgeschnittene Schnittgut so wie es ist, in die Kühlvitrine einen Lebensmittelgeschäftes gelegt oder es erfolgt ein Verpackungsschritt etwa mit Einschweißen in Folie und Etikettieren von portionsweisen Aufschnitten für ein Kühlregal im Supermarkt. Maschinen gemäß der Erfindung sind für den Thekenbetrieb konzipiert, also für den Einsatz unmittelbar im Geschäft und nicht in erster Linie für die Fleisch/verarbeitende Industrie. Der Vorteil liegt in der selbsttätigen Funktion des bedarfsgerechten Aufschneidens, sodaß die Ware besonders frisch in die Hände des Kunden gelangt.

Bei Anschluß des Speichers an einen Rechner, dem Verkaufsdaten, wie Schnittgutsorte, Menge und Uhrzeit der umgesetzten Ware von der oder den Rechenwaagen oder Kassen zur Erfassung des uhrzeitabhängigen durchschnittlichen Bedarfs je Schnittgutsorte zugeführt werden, läßt sich der uhrzeitabhängige und warenspezifische Umsatz statistisch erfassen. Die so gewonnene Information wird über den Rechner an den Speicher zum zeitgerechten Aufrufen von Aufschneidevorgängen weitergegeben. Damit liegen die technischen Voraussetzungen für eine umsatzgerechte Warenvorbereitung vor.

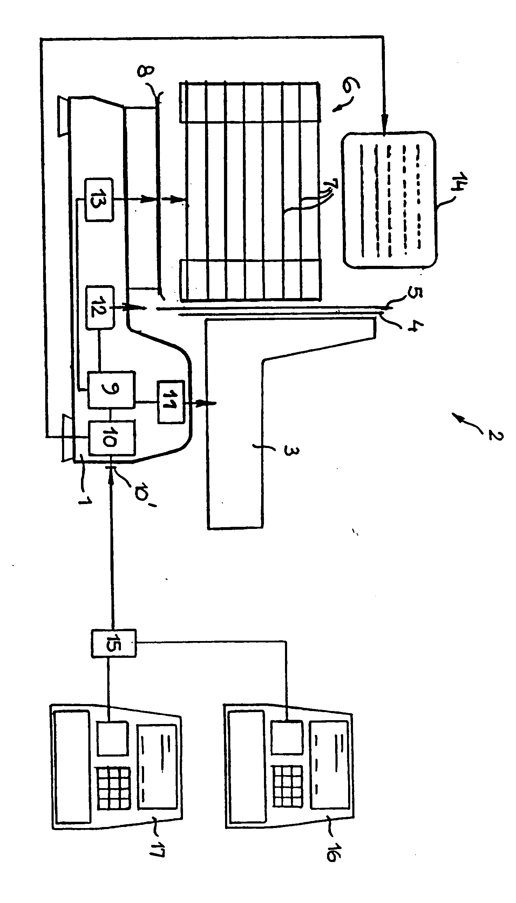

Ein Ausführungsbeispiel des Erfindungsgegenstandes ist in der Zeichnung schematisch dargestellt. Auf einem Maschinengehäuse 1 einer Aufschnittschneidemaschine 2 ist ein automatisch antreibbarer Schnittgutwagen 3 vorgesehen, der nach Einschalten hin- und hergehende Hubbewegungen ausführt. Ein rotierendes Kreismesser 4 sowie eine Anschlagplatte 5 sind dem Schnittgutwagen in bekannter Weise zugeordnet. Nicht dargestellt ist ein Schnittguthalter auf dem Schnittgutwagen, der bei jedem Hub das Schnittgut um das Maß der Schnittstärke gegen die Anschlagplatte 5 bzw. das Kreismesser 4 vorschiebt. Von einer Ablegeneinrichtung , die parallele Ketten 7 mit Spitzen umfaßt, werden die abgeschnittenen Schnittgutscheiben erfaßt, über ein Ablegetablett 8 transportiert und mittels eines Schlägers (nicht dargestellt) auf das Ablegetablett 8 gezielt abgeworfen. Die Funktionen der Aufschnittschneidemaschine 2 sind über eine Steuerung 9 und einen vorgeschalteten Speicher 10 bei Starten der Maschine aktivierbar. Eine Zähleinrichtung schaltet den Reversierantrieb 11 des Schnittgutwagens 3 nach einer von der Steuerung 9 vorgebbaren Anzahl von Hubzyklen ab. Die Schnittstärke wird durch einen Verstelltrieb 12 der Anschlagplatte 5 und bzw. oder durch einen schnittstärkeabhängigen Vorschub des Schnittgutes mittels eines elektrisch, beispielsweise über eine Schnecke, angetriebenen Schnittguthalters auf dem Schnittgutwagen 3 eingestellt. Die Steuerung 9 ist ferner über ein Schaltgerät 13 mit der Ablegeeinrichtung 6 zur Vorgabe von Förderweglänge und Abschlagzeitpunkt und mit einem Antrieb für das Ablegetablett 8 zur Ausführung von Längs- und gegebenenfalls Querbewegungen zwecks Erzielung eines nach zwei Achsenrichtungen überlappenden Aufschnitts verbunden. An die Steuerung 9 bzw. den vorgeschalteten Speicher 10 ist ferner eine Anzeigevorrichtung 14, beispielsweise ein Flüssigkristall-Display, angeschlossen.

Die an den Speicher 10 über eine Tastatur (z.B. auf dem Display der Anzeigevorrichtung) oder eine Schnittstelle eingebbaren technischen Daten eines Aufschneidevorganges gehen an die Steuerung 9 und führen zu einem selbsttätigen Aufschneidevorgang, sobald ein auf der Anzeigevorrichtung nach Uhrzeit und Gattung aufzuschneidendes Schnittgut auf dem Schnittgutwagen aufgelegt und der Schneidevorgang gestartet wurde. Menge des Aufschnittes, Schnittstärke und Ablegebild werden über den Speicher 10 und die Steuerung 9 selbsttätig eingestellt. Wenn statt des Ablegetabletts 8 ein Förderband verwendet wird, dann kann ein Schnittgut, z.B. eine Wurststange, in eine Anzahl von nacheinander abgelegten Portionen aufgeschnitten werden, die vom Förderband kontinuierlich einer Verpackungseinrichtung zugeführt werden. Ist im Speicher 10 eine größere Menge von Schnittgut eingespeichert, als der aus einer Wurststange aufgeschnittenen Menge entspricht, dann erscheint auf der Anzeigevorrichtung nochmals der Hinweis auf die aufzulegende Schnittgutsorte. Der Schneidevorgang wird bis zum Erreichen der vorgegebenen Schnittzahl fortgesetzt, sobald Schnittgut auf dem Schnittgutwagen 3 nachgeladen ist.

Die Dateneingabe an den Speicher 10 kann auch über den Anschluß 10' (Schnittstelle) von einem Rechner 15 erfolgen, an dessen Eingängen jeweils die Registrierkassen (bzw. Rechenwaagen) 16, 17 einer Lebensmittelabteilung liegen. Diese geben jeweils die Menge von umgesetzter, geschnittener Ware (Wurst, Käse) sowie die Sorte an den Rechner 15 weiter, der den voraussichtlichen Tagesbedarf nach Uhrzeit, Menge und Sorte erfaßt und an den Speicher allenfalls zusammen mit weiteren Aufschnittdaten, wie Ablegemuster oder Verpackungsart, weitergibt. Es kann so mit Hilfe der erfindungsgemäßen Aufschnittschneidemaschine der voraussichtliche Bedarf an geschnittener Ware vorbereitet werden.

## Patentansprüche

1. Aufschnittschneidemaschine (2) mit Ablegeeinrichtung (7) und mit einer Steuerung für die Ablegeeinrichtung und für den Antrieb eines Schnittgutwagens (3) sowie mit einem der Steuerung zugeordneten Datenspeicher (10) und einem Anschluß (10') zur Dateneingabe für die Anzahl der aufzuschneidenden Scheiben und mit einer Anzeigevorrichtung (14), dadurch gekennzeichnet, daß Schnittgutsorte, Schnittgutstärke, Ablegebild und Startzeit des Schneidevorganges zur bedarfskonformen Aufschnittvorbereitung zusätzlich einspeicherbar und dem Speicher (10) insbesondere von einem Rechner (15) zuführbar sind, der die Verkaufsdaten wie Schnittgutsorte, Menge und Uhrzeit des Warenumsatzes von der oder den Rechenwaagen oder Kassen (16, 17) zur Ermittlung des uhrzeitabhängigen durchschnittlichen Bedarfs je Schnittgutsorte erfaßt und daß die eingespeicherten zeitbezogenen Daten zeitabhängig auf die Anzeigevorrichtung (14) selbsttätig aufschaltbar und beim Starten der Maschine aus dem Speicher (10) zur Steuerung der Maschine abrufbar sind.

## Claims

1. A slicing machine (2) with a discharge device (7) and a control unit, both for the discharge device and the drive that operates the carriage for the material to be cut (3), as well as a data storage unit (10) that is associated to the control unit and has a connection (10') for entering the data on the number of slices to be cut, and a display unit (14) characterized in that the type of material to be cut, the thickness of the cut material, the arrangement of the cut, discharged material and the starting time for the cutting procedure can also be stored, in order to prepare the cutting operations in conformity with the cutting requirements, and can be forwarded to a data storage unit (10), especially by a computer (15), which compiles the sales data, such as type of the material to be cut, the quantity and hour of the sales transactions at one or several of the calculating and weighing devices or cash registers (16, 17), in order to determine the average, time-dependant demand for every type of material to be cut, and in that the saved, time-dependant data can be transferred automatically to a display unit (14) where they can be retrieved from a data storage unit (10) when starting the machine, in order to control the machine.

## Revendications

1. Machine à découper la charcuterie (2) avec un dispositif de dépose (7) et un système de commande pour le dispositif de dépose et pour l'entraînement d'un chariot portant le produit à découper (3) ainsi qu'une mémoire (10) affectée au système de commande et un raccord (10') pour l'entrée de données concernant le nombre de tranches ou rondelles à découper et un dispositif d'affichage (14), caractérisée en ce que le type de produit à découper, l'épaisseur, la disposition des tranches ou rondelles et le temps de démarrage du processus de coupe peuvent être entrés dans le but d'une préparation de la charcuterie en fonction des besoins et peuvent être transmis à la mémoire (10) en particulier par un ordinateur (15) qui saisit les paramètres des ventes, à savoir le type de produit à découper, la quantité et l'heure de la vente à partir de la ou des balance(s) automatique(s) ou caisse(s) (16,17) afin de déterminer le besoin moyen en fonction du temps par type de produit à découper, et que les données mémorisées peuvent être automatiquement affichées en fonction du temps sur le dispositif d'affichage (14) et être interrogées au moment du démarrage de la machine à partir de la mémoire (10) pour commander la machine.
